(19) Europäisches Patentamt
European Patent Office
Office européen des brevets

(11) **EP 4 571 395 A1**

(12) **EUROPEAN PATENT APPLICATION**
published in accordance with Art. 153(4) EPC

(43) Date of publication:
**18.06.2025 Bulletin 2025/25**

(51) International Patent Classification (IPC):
*G02B 27/09* (2006.01)   *G02B 27/30* (2006.01)
*G01B 11/22* (2006.01)   *G01S 7/481* (2006.01)

(21) Application number: **23853024.0**

(22) Date of filing: **10.08.2023**

(52) Cooperative Patent Classification (CPC):
**G01B 11/22; G01S 7/481; G02B 27/09; G02B 27/30**

(86) International application number:
**PCT/KR2023/011833**

(87) International publication number:
**WO 2024/035156 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.08.2022 KR 20220100643**

(71) Applicant: **LG INNOTEK CO. LTD
Gangseo-gu
Seoul 07796 (KR)**

(72) Inventors:
• **PARK, Gwui Youn
Seoul 07796 (KR)**
• **PARK, Ho Jin
Seoul 07796 (KR)**
• **LEE, Joong Hoon
Seoul 07796 (KR)**

(74) Representative: **DREISS Patentanwälte PartG
mbB
Friedrichstraße 6
70174 Stuttgart (DE)**

(54) **LIGHT OUTPUT DEVICE AND INFORMATION GENERATION DEVICE COMPRISING SAME**

(57) A light output device according to an embodiment of the present invention comprises: a light source having a long axis in a first direction; a lens group which is arranged on the light source, and which deforms a first light-emitting pattern that is output from the light source into a second light-emitting pattern and outputs same; and a diffusion member arranged on the lens group, wherein: the diffusion member includes a first surface arranged to face the light source, and a second surface that is opposite to the first surface; a plurality of convex patterns are arranged on the first surface; and each of the plurality of convex patterns has a long axis in the direction parallel to the first direction.

FIG. 10

EP 4 571 395 A1

# Description

[Technical Field]

The present invention relates to a light output device and an information generating device including the same.

[Background Art]

Three-dimensional (3D) content is being applied in many fields such as games, culture, education, manufacturing, and autonomous driving fields, and depth information (depth map) is required to obtain 3D content. Depth information is information that represents a distance in a space and represents far and near information of one point with respect to another point in a two-dimensional image. As a method of obtaining depth information, a method of radiating infrared (IR) structured light onto an object, a method using stereo cameras, and a method using a time of flight (ToF) are being used.

According to a ToF method, a distance to an object is calculated by measuring a ToF, that is, a time taken for light to be emitted and reflected to arrive back. The greatest advantage of the ToF method is that distance information about a 3D space is quickly provided in real time. In addition, users can obtain accurate distance information without having to apply separate algorithms or perform hardware corrections. It is also possible to obtain accurate depth information even when measuring very close subjects or moving subjects.

Meanwhile, in order to obtain depth information, a light-emitting unit of a camera device generates and radiates an output light signal onto an object, a light-receiving unit of the camera device receives an input light signal reflected from the object, and a depth information generating unit of the camera device generates depth information of the object using the input light signal received by the light-receiving unit.

Typically, light detection and ranging (LiDAR) cameras or direct-ToF (d-ToF) cameras aim to detect the same distance at all angles. To this end, these LiDAR cameras or d-ToF cameras require an optical system that transmits and receives a beam of a light source at the same distance at all angles.

[Disclosure]

[Technical Problem]

The technical object to be achieved by the present invention is to provide an information generating device capable of extracting depth information with high precision and resolution.

The technical problem to be achieved by the present invention is to provide an information generating device capable of detecting the same distance at all angles.

The technical object to be achieved by the present invention is to provide an information generating device capable of receiving an emission pattern with reduced distortion.

[Technical Solution]

A light output device according to an embodiment of the present invention includes a light source having a long axis in a first direction, a lens group disposed on the light source and configured to transform a first emission pattern output from the light source into a second emission pattern and output the second emission pattern, and a diffusion member disposed on the lens group, wherein the diffusion member includes a first surface disposed to face the light source and a second surface that is a surface opposite to the first surface, a plurality of convex patterns are disposed on the first surface, and each of the plurality of convex patterns has a long axis in a direction parallel to the first direction.

The diffusion member may transform the second emission pattern into a third emission pattern and may output the third emission pattern.

The second surface of the diffusion member may be a flat surface.

Each of the plurality of convex patterns may have a semi-cylindrical shape extending in the first direction.

The plurality of convex patterns may be disposed adjacent to each other in the first direction and a second direction perpendicular to a direction of an optical axis of the lens group.

A plurality of convex patterns may be further disposed on the second surface of the diffusion member, and the plurality of convex patterns formed on the first surface and the plurality of convex patterns formed on the second surface may be disposed symmetrically to each other.

Each of the plurality of convex patterns formed on the first surface and each of the plurality of convex patterns formed on the second surface may have a semi-cylindrical shape extending in the first direction.

The light source may include a plurality of emitters disposed in an m×n matrix, and n that is the number of emitters disposed in the first direction may be greater than m that is the number of emitters disposed in a second direction perpendicular to the first direction.

The lens group may include a first lens and a second lens sequentially disposed from the diffusion member, both surfaces of the first lens may have a convex shape, and both surfaces of the second lens may have a concave shape.

The third emission pattern may include first and second edges that are symmetrical to each other with respect to an axis in the first direction, and third and fourth edges that are symmetrical to each other with respect to an axis in a second direction that is perpendicular to the first direction, and the first to fourth edges may have a concave shape.

A light output device according to another embodiment of the present invention includes a light source configured to output a first emission pattern having a long axis in a first direction, a lens group disposed on the light source and configured to transform a first emission pattern into a second emission pattern and output the second emission pattern, and a diffusion member disposed on the lens group and configured to transform the second emission pattern into a third emission pattern and output the third emission pattern, wherein the third emission pattern includes first and second edges that are symmetrical to each other with respect to an axis in the first direction, and third and fourth edges that are symmetrical to each other with respect to an axis in a second direction perpendicular to the first direction, and the first to fourth edges have a concave shape.

An optical density of the third emission pattern may decrease as a distance from a center of the third emission pattern increases in the first direction and may decrease as the distance from the center of the third emission pattern increases in the second direction.

An optical density of the second emission pattern may decrease as a distance from a center of the second emission pattern increases in the first direction.

A distance between the first edge and the second edge in the second direction may increase as the distance from the center of the third emission pattern increases in the first direction, and a distance between the third edge and the fourth edge in the first direction may increase as the distance from the center of the third emission pattern increases in the second direction.

A light output device according to still another embodiment of the present invention includes a light source having a long axis in a first direction, a lens group disposed on the light source, and a diffusion member disposed on the lens group, wherein the diffusion member includes a first surface disposed to face the light source and a second surface that is a surface opposite to the first surface, wherein a plurality of convex patterns may be disposed on the first surface, and each of the plurality of convex patterns may have a long axis in a direction parallel to the first direction, and the lens group includes a first lens and a second lens sequentially disposed from the diffusion member, wherein both surfaces of the first lens may have a convex shape, and both surfaces of the second lens may have a concave shape.

The lens group may further include at least one lens disposed between the second lens and the light source, and a diameter of each of the first lens and the second lens may be less than a diameter of the at least one lens.

An information generating device according to an embodiment of the present invention includes a light-emitting unit including the light output device, a light-receiving unit including an image sensor, and an information generating unit configured to generate depth information using an optical signal received by the light-receiving unit.

An information generating device according to an embodiment of the present invention includes a light-emitting unit configured to output an emission pattern, a light-receiving unit configured to generate an incident pattern using the emission pattern, and an information generating unit configured to generate depth information using the incident pattern, wherein the emission pattern includes first and second edges which are symmetrical to each other with respect to an axis in a first direction, and third and fourth edges which are symmetrical to each other with respect to an axis in a second direction perpendicular to the first direction, wherein the first to fourth edges have a concave shape, and the incident pattern includes fifth and sixth edges which are symmetrical to each other with respect to the axis in the first direction, and seventh and eighth edges which are symmetrical to each other with respect to the axis in the second direction, wherein the fifth to eighth edges are flatter than the first to fourth edges.

A distance between the first edge and the second edge in the second direction may increase as a distance from a center of the emission pattern increases in the first direction, and a distance between the third edge and the fourth edge in the first direction may increase as the distance from the center of the emission pattern increases in the second direction.

A ratio of a distance between the first edge and the second edge in the second direction at a corner of the emission pattern to a distance between the first edge and the second edge in the second direction at the center of the emission pattern is greater than a ratio of a distance between the fifth edge and the sixth edge in the second direction at a corner of the incident pattern to a distance between the fifth edge and the sixth edge in the second direction at a center of the incident pattern, the corner of the emission pattern may be a point at which two edges of the first to fourth edges meet, and the corner of the incident pattern may be a point at which two edges of the fifth to eighth edges meet.

The light-emitting unit may include a plurality of emitters disposed in a shape of the emission pattern.

The plurality of emitters may be disposed at a higher density in a central area of the light source than in an edge area of the light source.

The plurality of emitters are disposed in an m×n matrix, and a distance between adjacent emitters may decrease in a direction toward a center of m rows and a center of n columns.

A light output device according to yet another embodiment of the present invention includes a light source having a long axis in a first direction, a lens group disposed on the light source, and a diffusion member disposed on the lens group, wherein the light source includes a plurality of emitters, wherein the plurality of emitters are disposed at a higher density in a central area of the light source than in an edge area of the light source, and the diffusion member includes a first surface disposed to face the light source and a second surface that is a surface opposite to the first surface, wherein a plurality of convex patterns are disposed on the first surface, and each of the plurality of convex patterns has a long axis in a direction parallel to the first direction.

The plurality of emitters may be disposed in an m×n matrix, and n that is the number of the plurality of emitters disposed in the first direction may be greater than m that is the number of the plurality of emitters disposed in a second direction perpendicular to the first direction.

A light output device according to yet another embodiment of the present invention includes a light source, and a lens group disposed on the light source, wherein the light source includes a plurality of emitters disposed in an m×n matrix, and a distance between adjacent emitters decreases in a direction toward a center of m rows and a center of n columns.

At least one of an imaginary line connecting a plurality of emitters disposed in the same row or an imaginary line connecting a plurality of emitters disposed in the same column may have a curve shape.

[Advantageous Effects]

According to embodiments of the present invention, it is possible to obtain an information generating device capable of extracting depth information with high precision and resolution and capable of detecting the same distance at all angles.

According to embodiments of the present invention, a light source can be miniaturized, and a beam can be transmitted or received at the same distance at all angles without the use of a micro-electro mechanical system (MEMS) or the like.

According to embodiments of the present invention, an emission pattern with reduced distortion is received, thereby enabling more accurate distance detection.

[Description of Drawings]

FIG. 1 is a block diagram of an information generating device according to an embodiment of the present invention.
FIG. 2 is a conceptual cross-sectional view of the information generating device according to an embodiment of the present invention.
FIG. 3 is a diagram for describing a principle of an f-theta optical system.
FIGS. 4A and 4B illustrate a shape of an incident pattern when a lens group of a light-receiving unit includes an f-theta optical system.
FIG. 5 is a top view illustrating an arrangement shape of a light source included in a light-emitting unit of a camera device according to one embodiment of the present invention.
FIG. 6 illustrates a first emission pattern output from the light source shown in FIG. 5.
FIG. 7 is a cross-sectional view of a lens group included in a light-emitting unit according to one embodiment of the present invention.
FIG. 8 illustrates a second emission pattern output from the lens group of FIG. 7.
FIGS. 9A to 9C are perspective views of a diffusion member included in the light-emitting unit according to one embodiment of the present invention.
FIG. 10 illustrates a third emission pattern output from the diffusion member of FIGS. 9A to 9C.
FIGS. 11A and 12 illustrate a diffusion member according to another embodiment of the present invention.
FIG. 13 is a cross-sectional view of a lens group of a light-receiving unit according to one embodiment of the present invention.
FIGS. 14A and 14B illustrate a transformation of a light pattern by a lens group of a light-receiving unit according to an embodiment of the present invention.
FIGS. 15A and 15B illustrate an arrangement shape of a light source according to another embodiment of the present invention.
FIGS. 16A and 16B illustrate an arrangement shape of a light source according to still another embodiment of the present invention.
FIG. 17 is an exploded view of a camera module according to an embodiment of the present invention.

[Modes of the Invention]

Hereinafter, exemplary embodiments of the present disclosure will be described with reference to the accompanying drawings.

However, the technical spirit of the present invention is not limited to some embodiments which will be described and may be realized using various other embodiments, and at least one component of the embodiments may be selectively coupled, substituted, and used to realize the technical spirit within the range of the technical spirit of the present invention.

In addition, unless clearly and specifically defined otherwise by context, all terms (including technical and scientific terms) used herein may be interpreted as having customary meanings to those skilled in the art, and meanings of generally used terms, such as those defined in commonly used dictionaries, will be interpreted by considering contextual meanings of the related technology.

In addition, the terms used in the embodiments of the present invention are for the purpose of describing the embodiments and are not intended to limit the present invention.

In the present specification, unless clearly indicated otherwise by the context, singular forms include the plural forms thereof, and in a case in which "at least one (or one or more) among A, B, and C" is described, this may include at least one combination among all combinations which may be combined with A, B, and C.

In addition, in descriptions of components of the present invention, terms such as "first," "second," "A," "B," "(a)," and "(b)" may be used.

The terms are only used to distinguish one element from another element, and an essence, order, and the like of the element are not limited by the terms.

In addition, it should be understood that, when an element is referred to as being "connected or coupled" to another element, such a description may include both of a case in which the element is directly connected or coupled to another element and a case in which the element is connected or coupled to another element with still another element disposed therebetween.

In addition, in a case in which any one element is described as being formed or disposed "on or below" another element, such a description includes both cases in which the two elements are formed or disposed in direct contact with each other and in which one or more other elements are interposed between the two elements. In addition, when one element is described as being disposed "on or under" another element, such a description may include a case in which the one element is disposed at an upper side or a lower side with respect to another element.

An information generating device according to an embodiment of the present invention may be an information generating device mounted in a vehicle to measure a distance between the vehicle and an object, but the present invention is not limited thereto. The information generating device according to the embodiment of the present invention may be a light detection and ranging (LiDAR) camera. The information generating device according to the embodiment of the present invention may extract depth information using a time of flight (ToF) principle. In the present specification, the information generating device may also be referred to as a depth information generating device or a camera device.

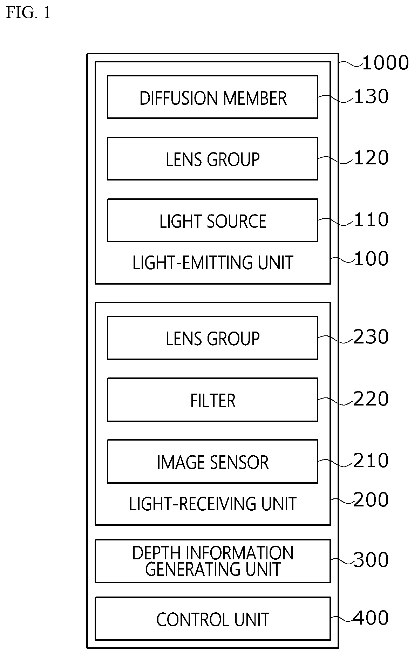

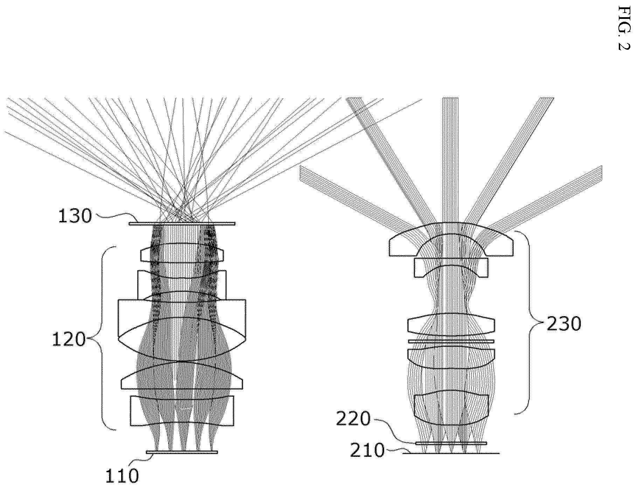

FIG. 1 is a block diagram of an information generating device according to an embodiment of the present invention. FIG. 2 is a conceptual cross-sectional view of the information generating device according to an embodiment of the present invention.

Referring to FIGS. 1 and 2, an information generating device 1000 according to an embodiment of the present invention includes a light-emitting unit 100, a light-receiving unit 200, a depth information generating unit 300, and a control unit 400.

The light-emitting unit 100 may generate and output an output light signal in the form of a pulse wave or a continuous wave. The continuous wave may be in the form of a sinusoid wave or a square wave. By generating an output light signal in the form of a pulse wave or continuous wave, the information generating device 1000 may detect a time difference or phase difference between the output light signal output from the light-emitting unit 100 and an input light signal reflected from an object and then input to the light-receiving unit 200. In the present specification, output light may be light that is output from the light-emitting unit 100 and is incident on an object, and input light may be light that is output from the light-emitting unit 100, reaches an object, and then is reflected from the object to be input to the light-receiving unit 200. In the present specification, a pattern of output light may be referred to as an emission pattern, and a pattern of input light may be referred to as an incident pattern. From a point of view of an object, the output light may be incident light, and the input light may be reflected light.

The light-emitting unit 100 may include a light source 110, a lens group 120 disposed on the light source 110, and a diffusion member 130 disposed on the lens group 120. The light source 110 generates and outputs light. The light generated by the light source 110 may be infrared light having a wavelength of 770 nm to 3,000 nm. Alternatively, the light generated by the light source 110 may be visible light having a wavelength of 380 nm to 770 nm. As the light source 110, a light-emitting diode (LED) may be used, and may have a form in which a plurality of LEDs are arranged in a certain pattern. In addition, the light source 110 may also include an organic light-emitting diode (OLED) or a laser diode (LD). Alternatively, the light source 110 may be a vertical cavity surface emitting laser (VCSEL). The VCSEL is one of laser diodes that convert an electrical signal into an optical signal and may output a wavelength of about 800 to about 1,000 nm, for example, about 850 nm or about 940 nm. The light source 110 is repeatedly turned on/off at certain time intervals to generate an output light signal in the form of a pulse wave or continuous wave. The certain time interval may be a frequency of the output light signal.

The lens group 120 may collect light output from the light source 110 and may output the collected light to the outside. The lens group 120 may be disposed above an upper portion of the light source 110 to be spaced apart from the light source 110. Here, the upper portion of the light source 110 may be a side through which light is output from the light source 110. The lens group 120 may include at least one lens. When the lens group 120 includes a plurality of lenses, each of the lenses may be arranged with respect to a central axis to form an optical system. Here, the central axis may be identical to an optical axis of the optical system.

The diffusion member 130 may receive light output from the light source 110 and the lens group 120 and then may output the received light by refracting or diffracting the light.

The light-receiving unit 200 may receive an optical signal reflected from an object. In this case, the received optical signal may be an optical signal output by the light-emitting unit 100 and reflected from an object.

The light-receiving unit 200 may include an image sensor 210, a filter 220 disposed on the image sensor 210, and a lens group 230 disposed on the filter 220. A light signal reflected from an object may pass through the lens group 230. An optical axis of the lens group 230 may be aligned with an optical axis of the image sensor 210. The filter 220 may be disposed between the lens group 230 and the image sensor 210. The filter 220 may be disposed on an optical path between an object and the image sensor 210. The filter 220 may filter light having a certain wavelength range. The filter 220 may transmit light in a specific wavelength band. The filter 220 may transmit light with a specific wavelength. For example, the filter 220 may transmit light in an infrared band and may block light outside the infrared band. The image sensor 210 may sense light. The image sensor 210 may receive an optical signal. The image sensor 210 may detect an optical signal and may output an electrical signal. The image sensor 210 may detect light with a wavelength corresponding to a wavelength of light output by the light source 110. For example, the image sensor 210 may detect light in an infrared band.

The image sensor 210 may have a structure in which a plurality of pixels are arranged in a grid form. The image sensor 210 may be a complementary metal oxide semiconductor (CMOS) image sensor or may be a charge coupled device (CCD) image sensor. **In** addition, the image sensor 210 may include a ToF sensor that receives infrared (IR) light reflected from an object and measures a distance using a time difference or phase difference.

The light-receiving unit 200 and the light-emitting unit 100 may be disposed side by side. The light-receiving unit 200 may be disposed next to the light-emitting unit 100. The light-receiving unit 200 may be disposed in the same direction as the light-emitting unit 100.

The depth information generating unit 300 may generate depth information of an object using an input light signal input to the light-receiving unit 200. For example, the depth information generating unit 300 may calculate depth information of an object using a flight time taken for an output light signal output from the light-emitting unit 100 to be reflected from an object and then input to the light-receiving unit 200. For example, the depth information generating unit 300 may calculate a time difference between an output light signal and an input light signal using an electric signal received by the image sensor 210 and may calculate a distance between an object and the information generating device 1000 using the calculated time difference. For example, the depth information generating unit 300 may calculate a phase difference between an output light signal and an input light signal using an electrical signal received from a sensor and may calculate a distance between an object and the information generating device 1000 using the calculated phase difference.

The control unit 400 controls the driving of the light-emitting unit 100, the light-receiving unit 200, and the depth information generating unit 300. The depth information generating unit 300 and the control unit 400 may be implemented in the form of a printed circuit board (PCB). In addition, the depth information generating unit 300 and the control unit 400 may be implemented in the form of different configurations. Alternatively, the control unit 400 may be included in a terminal or vehicle in which the information generating device 1000 according to the embodiment of the present invention is disposed. For example, the control unit 400 may be implemented in the form of an application processor (AP) of a smartphone equipped with the information generating device 1000 according to the embodiment of the present invention or may be implemented in the form of an electronic control unit (ECU) of a vehicle equipped with the information generating device 1000 according to the embodiment of the present invention.

Meanwhile, in an embodiment of the present invention, a LiDAR camera aims to detect the same distance at all angles. For this purpose, the lens group 230 of the light-receiving unit 200 may include an f-theta optical system or an f-sine theta optical system.

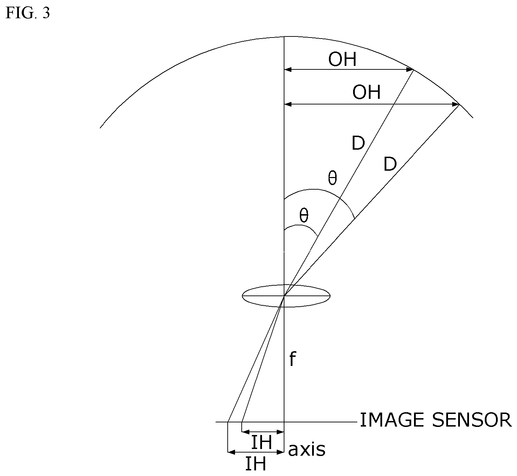

FIG. 3 is a diagram for describing a principle of an f-theta optical system.

Referring to FIG. 3, an object height OH may be expressed as in Equation 1, and an image height IH may be expressed as in Equation 2.

$$[\text{Equation 1}]$$

$$OH = D \times \sin\theta$$

$$\text{Equation 2}$$

$$IH = f \times \theta$$

Here, the object height OH may refer to a position of an object, that is, the position of the object in a horizontal direction perpendicular to an optical axis from the optical axis, and the image height IH may refer to a position on the image sensor in the horizontal direction perpendicular to the optical axis from the optical axis and may refer to pixel coordinates on the image sensor. A distance D may be a certain distance to an object from the information generating device (for example, the lens group 230 in the information generating device). A focal length f may correspond to a distance from the lens group 230 to the image sensor 210. An incident angle $\theta$ may correspond to an angle of light incident on the lens group 230 from an object.

In the f-theta optical system, when the distance between the lens group 230 and the object is the same but the incident angle is different, the image height IH reaching the image sensor 210 may not be proportional to the object height OH. In this way, it can be seen that, when the f-theta optical system is used, it is possible to detect the same distance at all angles.

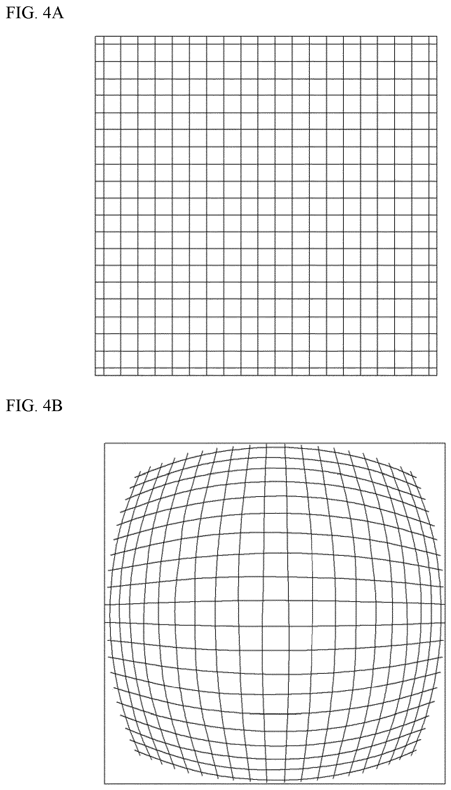

FIGS. 4A and 4B illustrate a shape of an incident pattern when the lens group of the light-receiving unit includes the f-theta optical system. As shown in FIG. 4A, in a case in which a reflection pattern reflected from an object has a grid shape corresponding to the pixel array of the image sensor, when the reflection pattern passes through the f-theta optical system, the reflection pattern may have an incident pattern with a transformed shape as shown in FIG. 4B.

That is, the light-receiving unit should include the f-theta optical system to detect the same distance at all angles, but an incident pattern incident on the image sensor 210 of the light-receiving unit 200 may be distorted due to the f-theta optical system, which may lower the accuracy of depth information.

According to an embodiment of the present invention, it is intended to compensate for the distortion of an incident pattern incident on the image sensor 210 of the light-receiving unit 200 using an emission pattern output from the light-emitting unit 100.

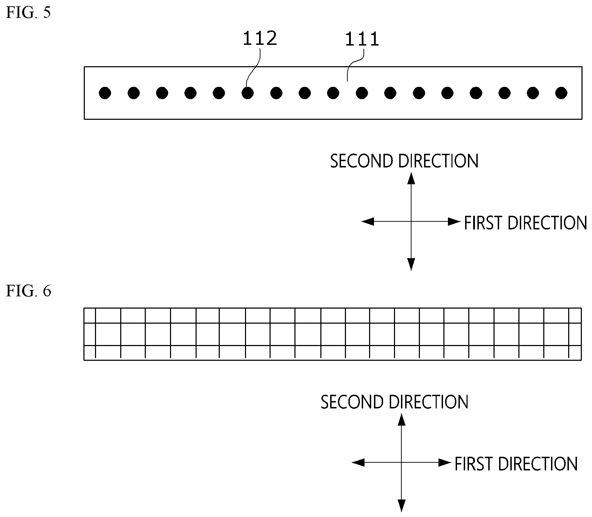

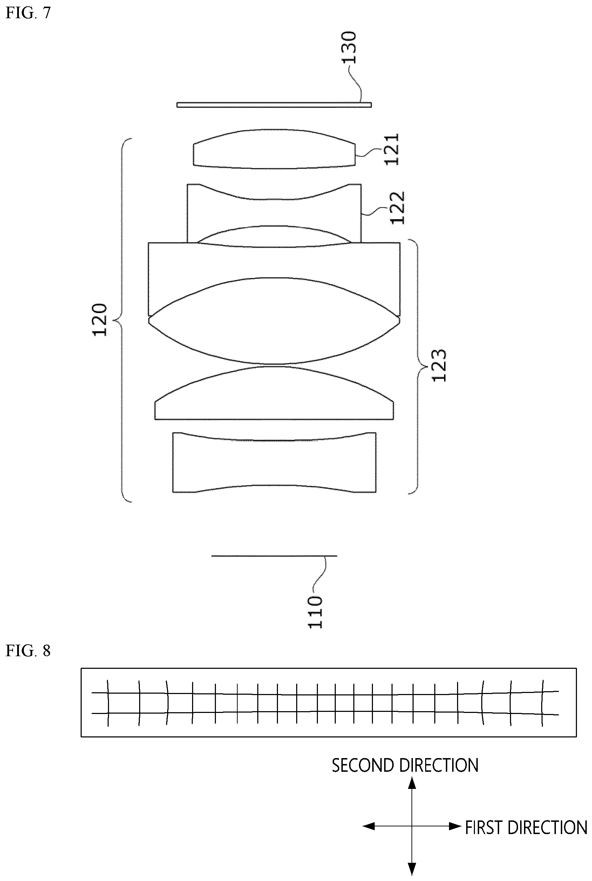

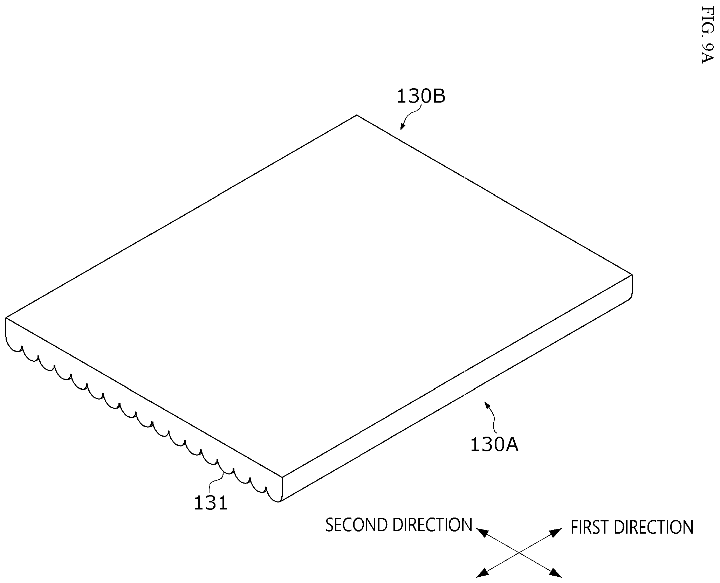

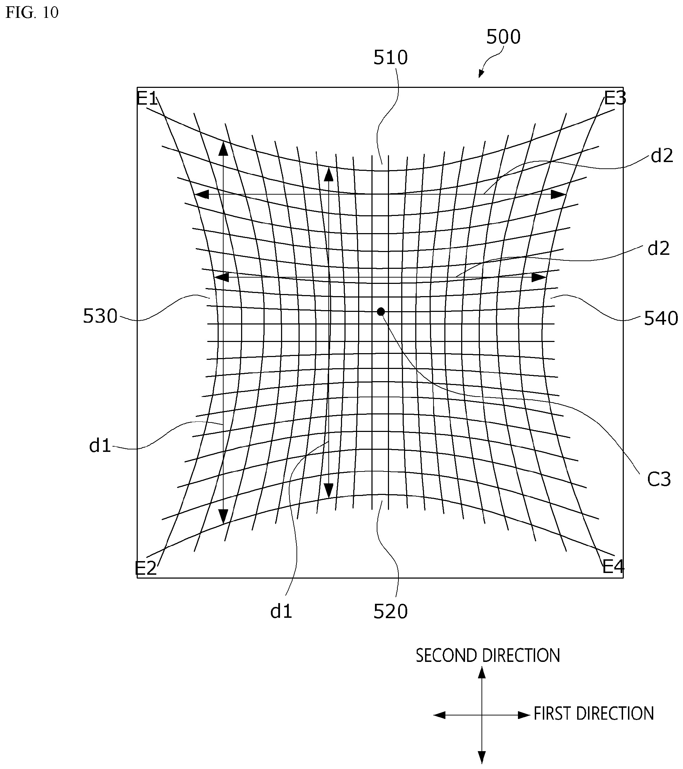

FIG. 5 is a top view illustrating an arrangement shape of a light source included in a light-emitting unit of a camera device according to one embodiment of the present invention. FIG. 6 illustrates a first emission pattern output from the light source shown in FIG. 5. FIG. 7 is a cross-sectional view of a lens group included in a light-emitting unit according to one embodiment of the present invention. FIG. 8 illustrates a second emission pattern output from the lens group of FIG. 7. FIGS. 9A to 9C are perspective views of a diffusion member included in the light-emitting unit according to one embodiment of the present invention. FIG. 10 illustrates a third emission pattern output from the diffusion member of FIGS. 9A to 9C.

Referring to FIGS. 2 and 5, a light source 110 may include a plurality of light-emitting elements 112. Specifically, the light source 110 may be implemented in the form of an array in which the plurality of light-emitting elements 112 are disposed on a substrate 111 according to a certain rule. The plurality of light-emitting elements 112 may be VCSELs. That is, the light source 110 may include a plurality of emitters 112 disposed in an $m \times n$ matrix, and n that is the number of emitters 112 disposed in a first direction may be greater than m that is the number of emitters 112 disposed in a second direction perpendicular to the first direction. Here, n may be an integer of 2 or more, and m may be an integer of 1 or more. Accordingly, the light source 110 may have a long axis in the first direction.

Referring to FIG. 6, the first emission pattern output from the light source 110 may correspond to an arrangement shape of the light source 110 and may have a long axis in the first direction. Here, the first emission pattern is exemplified as a line pattern in which a line in the first direction intersects a line in the second direction, but the present invention is not limited thereto. The first emission pattern may be a dot pattern or a surface pattern. Here, the dot pattern may be an array form of spots spaced from each other at certain intervals in a certain area. The surface pattern may be in a form in which light is uniformly spread in a certain area and may be used interchangeably with a flood lighting pattern, a surface light source pattern, or the like. Here, uniformity may mean that light is spread continuously in a space. In the present specification, both the first direction and the second direction may be directions perpendicular to a direction of an optical axis.

Referring to FIGS. 2 and 7, a lens group 120 may include a plurality of lenses disposed on the light source 110 and sequentially disposed in a direction from a diffusion member 130 toward the light source 110. For example, the lens group 120 may include five lenses sequentially disposed in the direction from the diffusion member 130 toward the light source 110. In the present specification, the lens group 120 may be referred to as a collimator because the lens group 120 collects light output from the light source 110 to output the collected light.

According to an embodiment of the present invention, the lens group 120 may include a first lens 121 that is positioned closest to the diffusion member 130 and has both surfaces with a convex shape, and a second lens 122 that is positioned closest to the first lens 121 and has both surfaces with a concave shape. According to an embodiment of the present invention, the lens group 120 may further include at least one lens 123 positioned between the second lens 122 and the light source 110. In this case, a diameter or effective diameter of each of the first lens 121 and the second lens 122 may be less than a diameter or effective diameter of the at least one lens 123.

According to an embodiment of the present invention, the first lens 121 and the second lens 122 serve to transform the first emission pattern output from the light source 110 into the second emission pattern, and at least one lens 123 serves to correct a chromatic aberration.

Referring to FIG. 8, the first emission pattern may be distorted by the lens group 120 and thus may be output as the second emission pattern. It may be seen that the first emission pattern shown in FIG. 6 has a long axis in the first direction and has an overall uniform line pattern interval. On the other hand, it may be seen that the second emission pattern shown in FIG. 8 has a long axis in the first direction, a line pattern interval becomes narrower in a direction toward a center of the second emission pattern, and a line pattern interval becomes wider in a direction away from the center of the second emission pattern. Here, the line pattern interval may be an optical density. That is, an optical density of the second emission pattern having the long axis in the first direction may decrease as a distance from the center of the second emission pattern increases in the first direction. Similarly, an optical density of the second emission pattern having the long axis in the first direction may decrease as the distance from the center of the second emission pattern increases in the second direction. Here, the second emission pattern is exemplified as a line pattern, but the present invention is not limited thereto. The second emission pattern may be a dot pattern or a surface pattern.

Referring to FIGS. 9A to 9C, the diffusion member 130 may be disposed on the lens group 120. **In** the present specification, the diffusion member 130 may also be referred to as a diffuser.

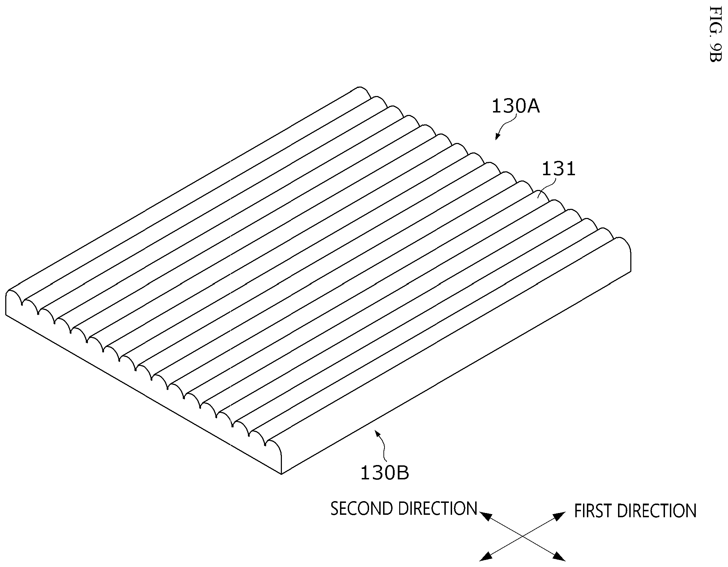

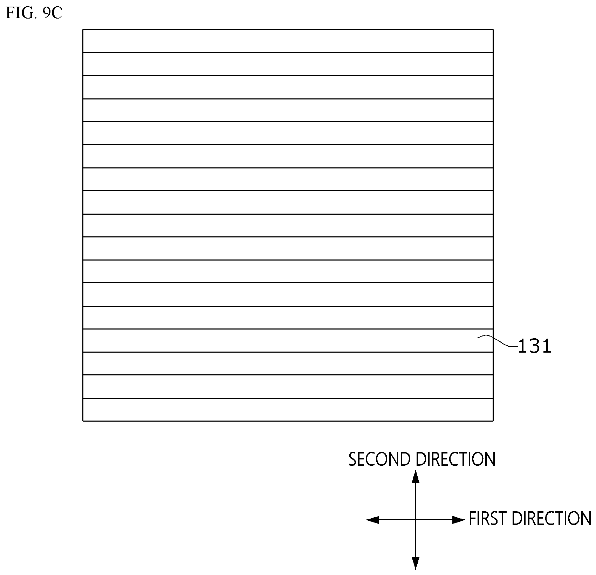

The diffusion member 130 includes a first surface 130A disposed to face the light source 110 and a second surface 130B that is a surface opposite to the first surface 130A. **In** order to describe detailed structures of the first surface 130A and the second surface 130B, FIG. 9A illustrates the first surface 130A facing downward, FIG. 9B illustrates the first surface 130 facing upward by rotating FIG. 9A by 180 degrees, and FIG. 9C is a plan view of the first surface 130A.

According to an embodiment of the present invention, a plurality of convex patterns 131 may be disposed on the first surface 130A of the diffusion member 130, the second surface 130B of the diffusion member 130 may be a flat surface, and each of the plurality of convex patterns 131 may extend to have a long axis in a direction parallel to the first direction. More specifically, according to an embodiment of the present invention, each of the plurality of convex patterns 131 may have a semi-cylindrical shape extending in the first direction, and the plurality of convex patterns 131 may be disposed adjacent to each other in the second direction perpendicular to the first direction.

Referring to FIG. 10, the second emission pattern may be transformed by the diffusion member 130 according to the embodiment of the present invention and then may be output as a third emission pattern 500. The second emission pattern may be diffused in the second direction by the diffusion member 130 according to the embodiment of the present invention and then may be output as the third emission pattern 500. According to an embodiment of the present invention, the third emission pattern 500 may include first and second edges 510 and 520 that are symmetrical to each other with respect to an axis in the first direction, and third and fourth edges 530 and 540 that are symmetrical to each other with respect to an axis in the second direction perpendicular to the first direction, and the first to fourth edges 510, 520, 530, and 540 may have a concave shape. Here, the third emission pattern 500 is exemplified as a line pattern, but the present invention is not limited thereto. The third emission pattern 500 may be a dot pattern or a surface pattern. In the present specification, an edge of a light pattern may be a periphery of a light distribution area having an optical density that is significant for generating depth information.

Here, the concave shape of the first edge 510 may mean that the first edge 510 has a shape gently curved toward a center C3 of the third emission pattern 500. Similarly, the fact that the second to fourth edges 520, 530, and 540 have the concave shape may mean that the second to fourth edges 520, 530, and 540 have a shape gently curved toward the center C3 of the third emission pattern 500.

That is, a distance d1 between the first edge 510 and the second edge 320 in the second direction may increase as a distance from the center C3 of the third emission pattern 500 increases in the first direction, and a distance d2 between the third edge 530 and the fourth edge 540 in the first direction may increase as a distance from the center C3 of the third emission pattern 500 increases in the second direction.

Accordingly, an optical density of the third emission pattern 500 may decrease as the distance from the center C3 of the third emission pattern 500 increases in the first direction and may decrease as the distance from the center C3 of the third emission pattern 500 increases in the second direction. An area with the highest optical density in the third emission pattern 500 may be the center C3 of the third emission pattern 500, and areas with the lowest optical density in the third emission pattern 500 may be a point E1 at which the first and third edges 510 and 530 meet, a point E2 at which the second and third edges 320 and 330 meet, a point E3 at which the first and fourth edges 310 and 340 meet, and a point E4 at which the second and fourth edges 320 and 340 meet.

In this way, the third emission pattern 500 output from the diffusion member 130 may be reflected from an object and then may be incident on a light-receiving unit 200.

Meanwhile, various modifications may be applied to the diffusion member according to the embodiment of the present invention.

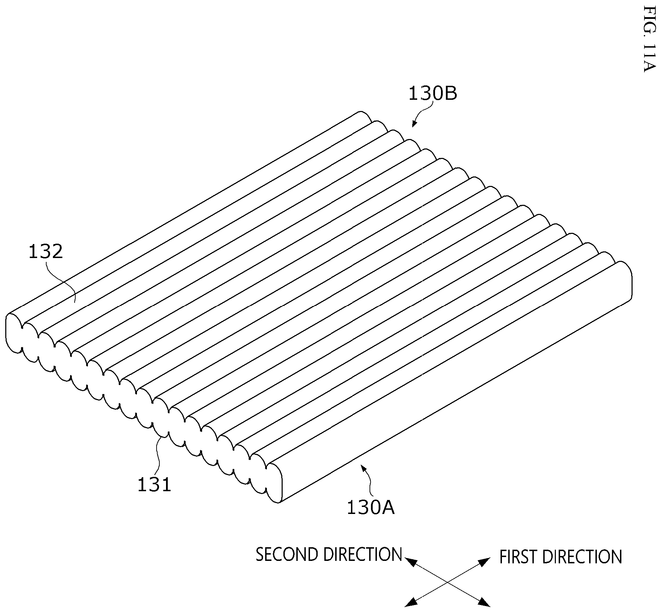

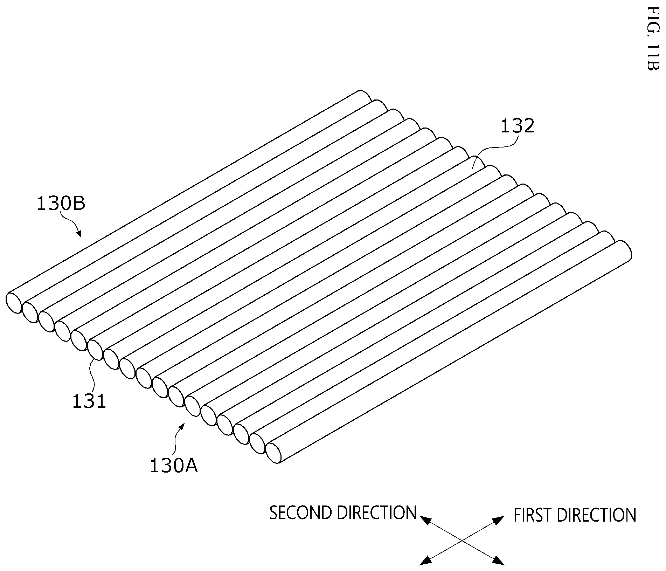

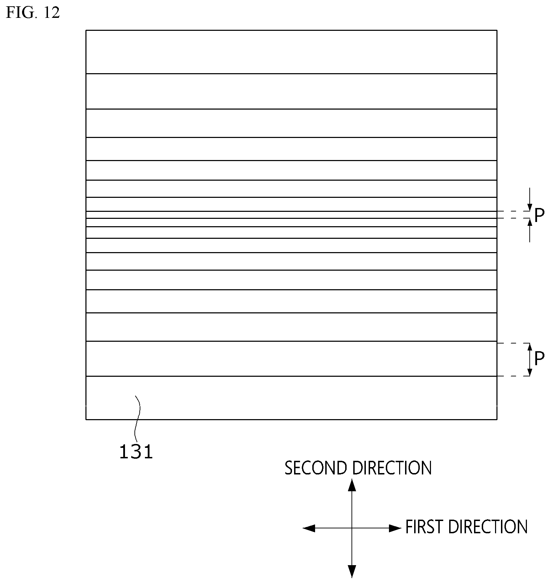

FIGS. 11A, 11B, and 12 illustrate a diffusion member according to another embodiment of the present invention.

Referring to FIGS. 11A and 11B, a plurality of convex patterns 132 may also be disposed on a second surface 130B which is a surface opposite to a first surface 130A disposed to face a light source 110 among both surfaces of a diffusion member 130. That is, according to another embodiment of the present invention, the plurality of convex patterns 132 may also be disposed on the second surface 130B of the diffusion member 130, and each of the plurality of convex patterns 132 may extend to have a long axis in a direction parallel to a first direction. More specifically, according to another embodiment of the present invention, each of the plurality of convex patterns 132 may have a semi-cylindrical shape extending in the first direction, and the plurality of convex patterns 132 may be disposed adjacent to each other in a second direction perpendicular to the first direction.

Referring to FIG. 11A, a plurality of convex patterns 131 formed on the first surface 130A and the plurality of convex patterns 132 formed on the second surface 130B may be disposed symmetrically to each other.

Alternatively, referring to FIG. 11B, each of the plurality of convex patterns 131 formed on the first surface 130A and each of the plurality of convex patterns 132 formed on the second surface 130B may form one cylindrical shape extending in the first direction.

Referring to FIG. 12, the plurality of convex patterns 131 may have different pitches P. For example, each of the plurality of convex patterns 131 may have a semi-cylindrical shape extending in the first direction, the plurality of convex patterns 131 may be disposed adjacent to each other in the second direction perpendicular to the first direction, and diameters of the semi-cylindrical shapes of the plurality of convex patterns 131, that is, distances in the second direction, may be designed to be different.

In FIG. 12, a diameter of the semi-cylindrical shape of the plurality of convex patterns 131 is illustrated as increasing from a central area of the diffusion member 130 to an edge area, but the present invention is not limited thereto. Although not shown, the diameter of the semi-cylindrical shape of the plurality of convex patterns 131 may decrease from the central area of the diffusion member 130 to the edge area. Although not shown, the diameter of the semi-cylindrical shape of the plurality of convex patterns 131 may increase and then decrease again from the central area of the diffusion member 130 to the edge area. Although not shown, the diameter of the semi-cylindrical shape of the plurality of convex patterns 131 may be randomly designed without any regularity. Thus, the energy of output light may be dispersed, which may increase the safety for the user's eyes and may also prevent degradation in homogeneity due to interference.

In FIG. 12, although pitches of the plurality of convex patterns 131 formed on the first surface 130A of the diffusion member 130 are mainly described, the present invention is not limited thereto, and pitches of the plurality of convex patterns 132 formed on the second surface 130B of the diffusion member 130 may be designed to be symmetrical to the pitches of the plurality of convex patterns 131 formed on the first surface 130A of the diffusion member 130.

Meanwhile, as described above, a LiDAR camera according to an embodiment of the present invention is directed to detecting the same distance at all angles. A lens group 230 of a light-receiving unit 200 may include an f-theta optical system or an f-sine theta optical system.

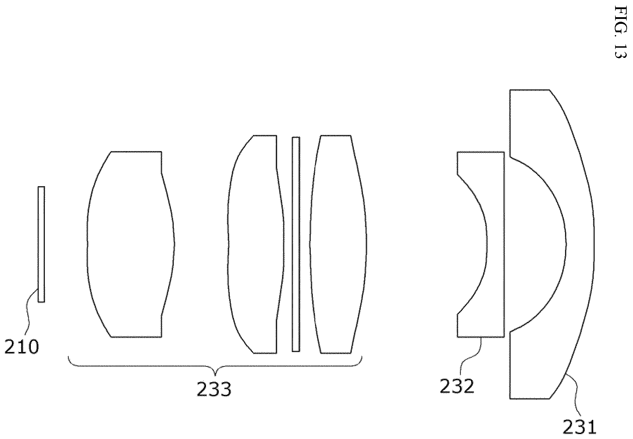

FIG. 13 is a cross-sectional view of a lens group of a light-receiving unit according to one embodiment of the present invention.

Referring to FIG. 13, according to an embodiment of the present invention, a lens group 230 includes a plurality of lenses sequentially disposed from an object (subject) to an upper side (image sensor 210 side). The lens group 230 may include a first lens 231 which is disposed closest to the object and of which a surface facing the object has a convex shape and an upper surface has a concave shape, and a second lens 232 which is disposed closest to the first lens 231 and of which a surface facing the object has a flat shape and an upper surface has a concave shape. According to an embodiment of the present invention, the lens group 230 may further include at least one lens 233 disposed between the second lens 232 and the image sensor 210. In this case, the first lens 231 may have the largest diameter or effective diameter among the plurality of lenses included in the lens group 230, and the second lens 232 may have the smallest diameter or effective diameter among the plurality of lenses included in the lens group 230. A distance between the second lens 232 and a lens positioned closest to the object among at least one lens 233 may be the longest among distances between the lenses included in the lens group 230.

According to an embodiment of the present invention, the first lens 231 and the second lens 232 serve to transform a third emission pattern reflected from an object into an incident pattern incident on the image sensor 210, and at least one lens 233 serves to correct a chromatic aberration.

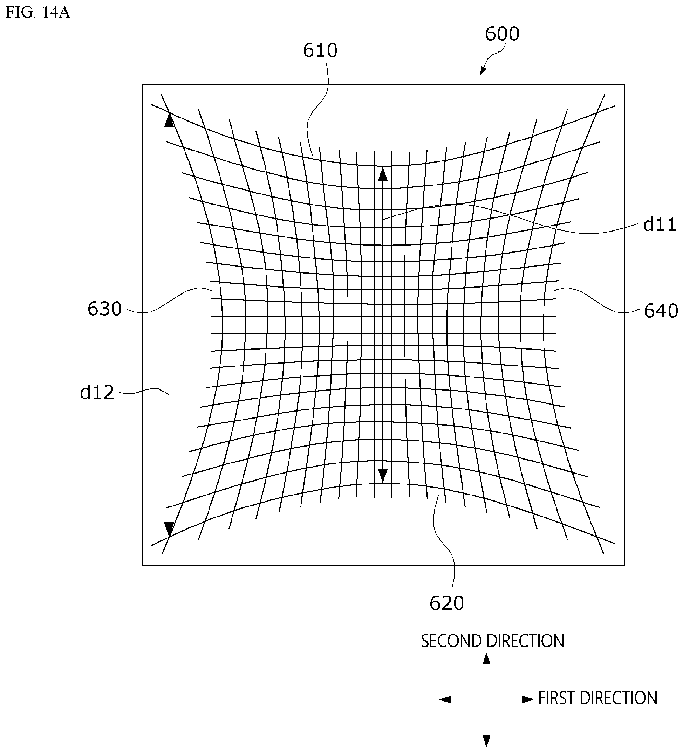

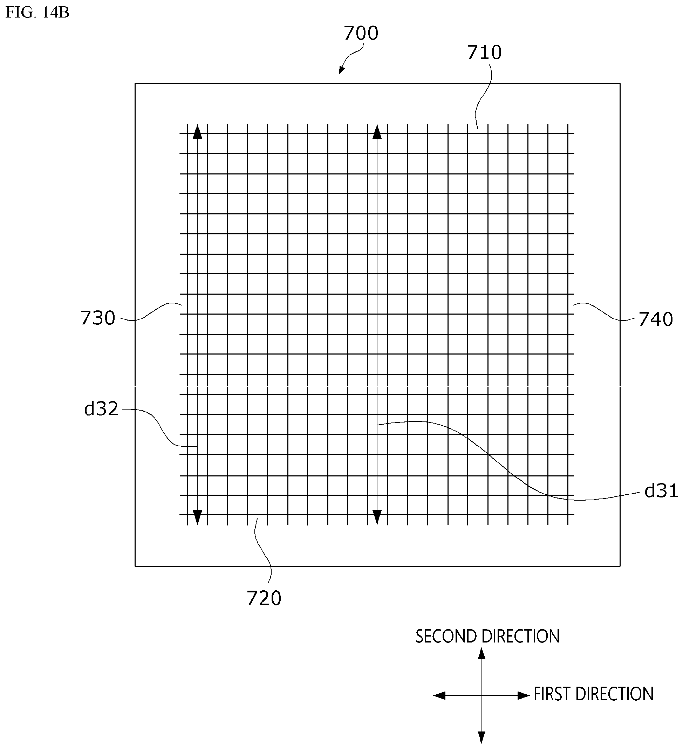

FIGS. 14A and 14B illustrate a transformation of a light pattern by a lens group of a light-receiving unit according to an embodiment of the present invention.

FIG. 14A illustrates a shape of a light pattern that is incident on a lens group 230 of a light-receiving unit 200 after a third emission pattern 500 output from a light-emitting unit 100 is reflected from an object as described above. FIG. 14B illustrates a shape of a light pattern incident on an image sensor after the light pattern of FIG. 14A passes through the lens group of the light-receiving unit according to the embodiment of the present invention.

As described above, referring to FIG. 14A, a light pattern 600 incident on the lens group 230 of the light-receiving unit 200 may have the same shape as the third emission pattern 500 and may include first and second edges 610 and 620 that are symmetrical to each other with respect to an axis in a first direction, and third and fourth edges 630 and 640 that are symmetrical to each other with respect to an axis in a second direction perpendicular to the first direction. The first to fourth edges 610, 620, 630, and 640 may have a concave shape.

Referring to FIG. 14B, an incident pattern 700 that is transformed by the lens group 230 of the light-receiving unit 200 and then is incident on the image sensor 210 includes fifth and sixth edges 710 and 720 that are symmetrical to each other with respect to the axis in the first direction, and seventh and eighth edges 730 and 740 that are symmetrical to each other with respect to the axis in the second direction. The fifth to eighth edges 710, 720, 730, and 740 are flatter than the first to fourth edges 610, 620, 630, and 630.

More specifically, a distance between the first edge 610 and the second edge 620 in the second direction in the light pattern 600 increases as a distance from a center of the light pattern 600 increases in the first direction, and a distance between the third edge 630 and the fourth edge 640 in the first direction increases as the distance from the center of the light pattern 600 increases in the second direction. A ratio d12/d11 of a distance d12 between the first edge 610 and the second edge 620 in the second direction at an edge of the light pattern to a distance d11 between the first edge 610 and the second edge 620 in the second direction at the center of the light pattern 600 is greater than a ratio d32/d31 of a distance d32 between the fifth edge 710 and the sixth edge 720 in the second direction at an edge of the incident pattern 700 to a distance d31 between the fifth edge 710 and the sixth edge 720 in the second direction at the center of the incident pattern 700. Similarly, a ratio of a distance between the third edge 630 and the fourth edge 640 in the first direction at the edge of the light pattern 600 to a distance between the third edge 630 and the fourth edge 640 in the first direction at the center of the light pattern 600 may be greater than a ratio of a distance between the seventh edge 730 and the eighth edge 740 in the first direction at the edge of the incident pattern 700 to a distance between the seventh edge 730 and the eighth edge 740 in the first direction at the center of the incident pattern 700. In this case, the edge of the light pattern 600 may be a point at which two edges of the first to fourth edges meet, and the edge of the incident pattern 700 may be a point at which two edges of the fifth to eighth edges meet.

Thus, the incident pattern 700 may have a grid shape corresponding to a pixel array of the image sensor 210, and depth information may be generated with high accuracy without distortion while the same distance at all angles is detected.

In the above, an embodiment in which an emission pattern output from the light-emitting unit 100 is controlled using the lens group 120 and the diffusion member 130 of the light-emitting unit 100 has been mainly described, but the embodiment of the present invention is not limited thereto.

The light-emitting unit 100 may also control an emission pattern output from the light-emitting unit 100 using an arrangement shape of the light source 110.

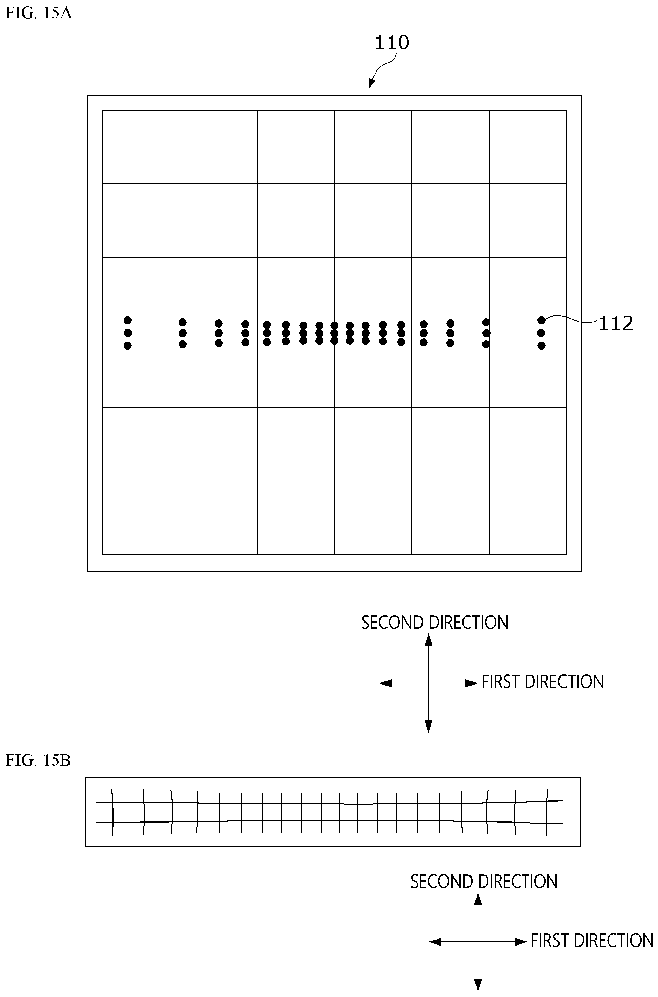

FIGS. 15A and 15B illustrate an arrangement shape of a light source according to another embodiment of the present invention.

Referring to FIG. 15A, a light source 110 includes a plurality of emitters 112 and may be disposed to have a long axis in a first direction. In this case, the plurality of emitters 112 may be disposed to have a higher density in a central area of the light source 110 than in an edge area of the light source 110. For example, the plurality of emitters 112 are disposed in an m×n matrix, and n that is the number of emitters 112 disposed in the first direction may be greater than m that is the number of emitters 112 disposed in a second direction perpendicular to the first direction. Here, the number m of emitters 112 disposed in the second direction may be greater than 2. A distance between the plurality of emitters 112 disposed in the first direction may increase as a distance from a center of the light source 110 increases, and a distance between the plurality of emitters 112 disposed in the second direction may increase as the distance from the center of the light source 110 increases.

When the light source 110 has an arrangement shape of FIG. 15A, an emission pattern output from the light source 110 may be as shown in FIG. 15B and may be the same as the second emission pattern output from the lens group 120 shown in FIG. 8.

In this way, when the light source 110 has the arrangement shape of FIG. 15A, in a light-emitting unit 100, at least a portion of the lens group 120 shown in FIG. 7 may be omitted. For example, when the light source 110 has the arrangement shape of FIG. 15A, the light-emitting unit 100 may include a general lens group. That is, the light-emitting unit 100 may include a lens group that does not cause distortion, rather than the lens group 120 shown in FIG. 7. However, even when the light source 100 has the arrangement shape of FIG. 15A, the light-emitting unit 100 may include the diffusion member 130 shown in FIGS. 9A to 9C. Even in this case, the diffusion member 130 may be formed to be elongated in the first direction. That is, a plurality of convex patterns are disposed on the diffusion member 130, and each of the plurality of convex patterns may extend to have a long axis in a direction parallel to the first direction.

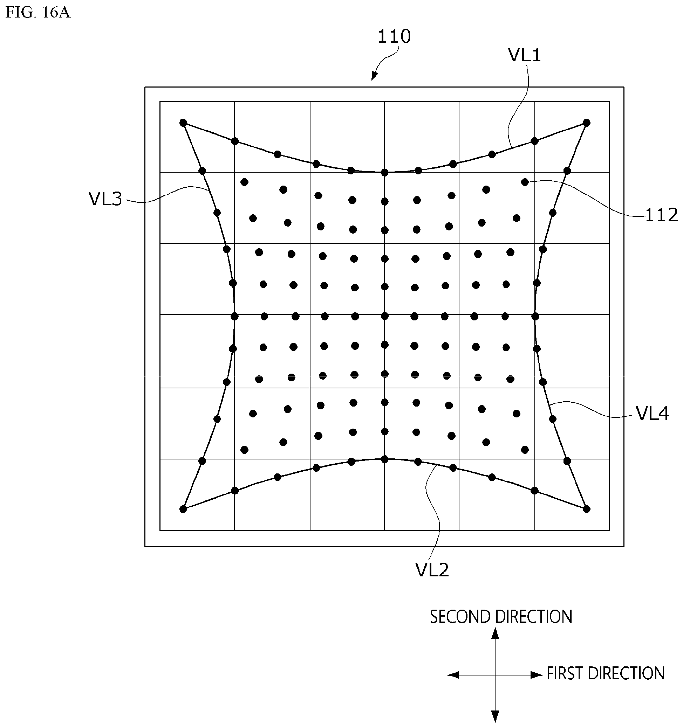

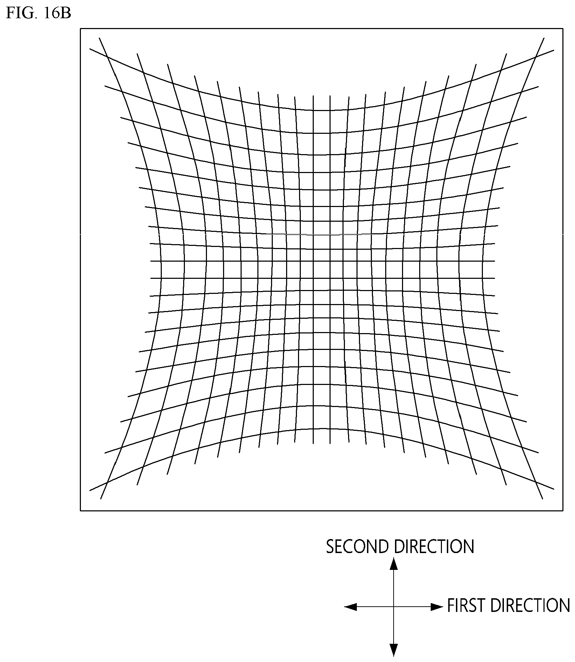

FIGS. 16A and 16B illustrate an arrangement shape of a light source according to still another embodiment of the present invention.

Referring to FIG. 16A, a light source 110 may include a plurality of emitters 112, and the plurality of emitters 112 may be disposed in an m×n matrix and may be disposed such that a distance between adjacent emitters 112 decreases in a direction toward a center of m rows and a center of n columns. An imaginary line connecting a plurality of emitters disposed in the same row or an imaginary line connecting a plurality of emitters disposed in the same column may have a curve shape. For example, n that is the number of emitters 112 disposed in the first direction may be equal to m that is the number m of emitters 112 disposed in a second direction perpendicular to the first direction, but the present invention is not limited thereto.

In this case, imaginary lines connecting the plurality of emitters 112 disposed at the outermost edge may include first and second imaginary lines VL1 and VL2 that are symmetrical to each other with respect to an axis in the first direction, and third and fourth imaginary lines VL3 and VL4 that are symmetrical to each other with respect to an axis in the second direction. The first to fourth imaginary lines VL1 to VL4 may have a concave shape. The fact that the first imaginary line VL1 has the concave shape may mean that the first imaginary line VL1 has a shape gently curved toward a center of the light source 110. Similarly, the fact that the second to fourth imaginary lines VL2 to VL4 have the concave shape may mean that the second to fourth imaginary lines VL2 to VL4 have a shape gently curved toward the center of the light source 110.

That is, a distance between the first imaginary line VL1 and the second imaginary line VL2 in the second direction may increase as a distance from the center of the light source 110 increases in the first direction, and a distance between the third imaginary lines VL3 and the fourth imaginary line VL4 in the first direction may increase as the distance from the center of the light source 110 increases in the second direction.

According to an embodiment of the present invention, a distance between the plurality of emitters 112 disposed in the first direction to pass through the center of the light source 110 may be equal to a distance between the plurality of emitters 112 disposed in the second direction to pass through the center of the light source 110. However, the distance between the plurality of emitters 112 disposed in the first direction to pass through the center of the light source 110 may not be equal to the distance between the plurality of emitters 112 disposed in the second direction to pass through the center of the light source 110. Excluding the plurality of emitters 112 disposed in the first direction to pass through the center of the light source 110 and the plurality of emitters 112 disposed in the second direction to pass through the center of the light source 110, a distance between the plurality of emitters 112 may increase as the distance from the center of the light source 110 increases.

When the light source 110 has the arrangement shape of FIG. 16A, an emission pattern output from the light source 110 may be as shown in FIG. 16B and may be the same as the third emission pattern 500 output from the diffusion member 130 shown in FIG. 10.

In this way, when the light source 110 has the arrangement shape of FIG. 1A, in a light-emitting unit 110, at least a portion of the lens group 120 shown in FIG. 7 and the diffusion member 130 shown in FIGS. 9A to 9C may be omitted. For example, when the light source 110 has the arrangement shape of FIG. 16A, the light-emitting unit 100 may include a general lens group. That is, the light-emitting unit 100 may include a lens group that does not cause distortion, rather than the lens group 120 shown in FIG. 7. In addition, when the light source 100 has the arrangement shape of FIG. 16A, the light-emitting unit 100 may not include the diffusion member 130 shown in FIGS. 9A to 9C. That is, the light-emitting unit 100 may radiate a light signal output from the lens group 120 onto an object.

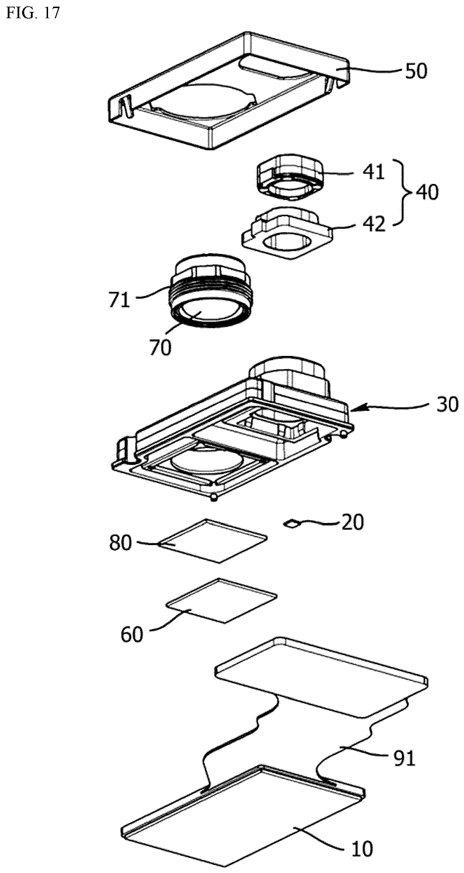

FIG. 17 is an exploded view of a camera module according to an embodiment of the present invention.

The camera module may include a light-emitting unit and a light-receiving unit. However, since components such as a substrate 10, a holder 30, and a shield can 50 are integrally formed and commonly used for the light-emitting unit and the light-receiving unit, the components may be difficult to distinguish between the light-emitting unit and the light-receiving unit. In this case, each of the components may be understood as a component of each of the light-emitting unit and the light-receiving unit. However, as a modified example, the common components such as the substrate 10, the holder 30, and the shield can 50 may be separately provided to each of the light-emitting unit and the light-receiving unit.

The light-emitting unit may include the substrate 10, a light source 20, the holder 30, a diffusion member 41, a diffuser ring 42, and the shield can 50. The light-receiving unit may include the substrate 10, a sensor 60, a filter 80, a holder 30, a lens 70, a barrel 71, and the shield can 50.

The substrate 10 may include a PCB. The substrate 10 may be connected to a connector through a flexible PCB (FPCB) 91. The substrate 10 and the FPCB 91 may be formed as rigid flexible PCBs (RFPCBs). A light source 20 and the sensor 60 may be disposed on the substrate 10. The substrate 10 may be disposed below the holder 30. The substrate 10 may include terminals. The terminal of the substrate 10 may be connected to a coupling portion of the shield can 50. The terminals of the substrate 10 may include a plurality of terminals. The terminals of the substrate 10 may include two terminals.

The light source 20 may be disposed on the substrate 10. The light source 20 may be disposed in contact with the substrate 10. The light source 20 may be disposed above the substrate 10. The light source 20 may be disposed on the substrate 10. The light source 20 may correspond to the light source 110 described above.

The holder 30 may be disposed on the substrate 10. The holder 30 may be disposed in contact with the substrate 10. The holder 30 may be disposed above the substrate 10. The holder 30 may be disposed on the substrate 10. The holder 30 may be fixed to the substrate 10 through an adhesive. The holder 30 may accommodate the light source 20, a diffuser module 40, the sensor 60, and the filter 80 therein. The holder 30 may be a plastic injection molded product. The holder 30 may be formed through injection molding.

The diffuser module 40 may include the diffusion member 41 and the diffuser ring 42. The diffuser module 40 may be integrally formed as in the modified example, but in the present embodiment, the diffuser module 40 may be manufactured to be separated into the diffusion member 41 and the diffuser ring 42 to increase moldability during injection molding. The diffusion member 41 and the diffuser ring 42 may be separated from each other.

The diffusion member 41 may be a diffuser lens. The diffusion member 41 may correspond to the diffusion member 130 described above. The diffusion member 41 may be disposed in the holder 30. The diffusion member 41 may be coupled to the holder 30. The diffusion member 41 may be fixed to the holder 30. The diffusion member 41 may be disposed on an optical path of light emitted from the light source 20. The diffusion member 41 may be disposed on the light source 20. The diffusion member 41 may be disposed above the light source 20. The diffusion member 41 may be a plastic injection molded product. The diffusion member 41 may be formed through plastic injection molding. A height of an upper end of the diffusion member 41 may correspond to a height of an upper end of the lens 70. The diffusion member 41 may be inserted in an upward direction of a vertical direction and coupled to the holder 30. In this case, the upward direction may be a direction from a lower portion of the holder 30 toward an upper portion of the holder 30. A portion of the diffusion member 41 may overlap the holder 30 in the upward direction.

The diffuser ring 42 may be disposed in the holder 30. The diffuser ring 42 may be fixed to the holder 30. The diffuser ring 42 may be coupled to the holder 30. The diffuser ring 42 may be disposed below the diffusion member 41. The diffuser ring 42 may support the diffusion member 41. The diffuser ring 42 may be in contact with the diffusion member 41. The diffuser ring 42 may be a plastic injection molded product. The diffuser ring 42 may be formed through plastic injection molding.

The shield can 50 may cover a body of the holder 30. The shield can 50 may include a cover. The shield can 50 may include a cover can. The shield can 50 may be a nonmagnetic body. The shield can 50 may be formed of a metal material. The shield can 50 may be formed of a metal plate. The shield can 50 may be electrically connected to the substrate 10. The shield can 50 may be connected to the substrate 10 through solder balls. Thus, the shield can 50 may be grounded. The shield can 50 may block electromagnetic interference (EMI) noise. In this case, the shield can 500 may be referred to as "EMI shield can." In the present embodiment, since a high voltage is used inside an optical device, EMI noise may increase, and the shield can 50 may block the EMI noise.

The sensor 60 may be disposed on the substrate 10. The sensor 60 may be disposed at the other side of a partition wall of the holder 30 on the substrate 10. That is, the sensor 60 may be disposed at a side opposite to the light source 20 with respect to the partition wall of the holder 30. The sensor 60 may detect infrared rays. The sensor 60 may detect light with a specific wavelength among infrared rays. The sensor 60 may detect light passing through the filter 80. The sensor 60 may detect light in a wavelength band of the light source 20. Thus, the sensor 60 may detect light emitted from the light source 20 and reflected on a subject, thereby sensing three-dimensional (3D) image information of the subject. An effective sensing area of the sensor 60 is disposed to correspond to the diffusion member 41, but the sensor 60 may be disposed to be entirely biased toward the partition wall. A circuit pattern or the like of the sensor 60 may be disposed in a portion of the sensor 60 that is biased toward the partition wall.

The lens 70 may be fixed in the barrel 71. The lens 70 may be a plastic injection molded product. The lens 70 may be formed through plastic injection molding. The lens 70 may include a plurality of lenses.

The filter 80 may be disposed between the lens 70 and the sensor 60. The filter 80 may be a band pass filter that transmits light in a specific wavelength band. The filter 80 may transmit infrared light. The filter 80 may transmit light with a specific wavelength in infrared light. The filter 80 may transmit light in a wavelength band of light emitted by the light source 20. The filter 80 may block visible light. The filter 80 may be coupled to the holder 30. A groove with a size corresponding to the filter 80 may be formed in the holder 30, and the filter 80 may be inserted into the groove and fixed through an adhesive. An adhesive injection groove for injecting an adhesive between the filter 80 and the holder 30 may be formed in the groove of the holder 30. The filter 80 may be positioned at a lower level than the diffuser ring 42.

In the above, a camera device that extracts depth information using a ToF method has been described, but the embodiment of the present invention is not limited thereto. A camera device according to an embodiment of the present invention may be a camera device that extracts depth information using a structured light method. That is, the camera device according to the embodiment of the present invention may use structured light having a certain pattern as an output light signal and may generate depth information using the disparity of the structured light.

While the present invention has been described with reference to the embodiments thereof, this is merely an example and is not intended to limit the present invention, and those skilled in the art to which the present invention pertains will be able to understand that various modifications and applications not exemplified above are possible without departing from the essential characteristics of the present embodiment. For example, each component specifically shown in the embodiment may be implemented by modification. In addition, differences related to the modifications and applications should be construed as being included in the scope of the present invention defined in the appended claims.

## Claims

1. A light output device comprising:

   a light source having a long axis in a first direction,
   a lens group disposed on the light source and configured to transform a first emission pattern output from the light source into a second emission pattern and output the second emission pattern; and
   a diffusion member disposed on the lens group,
   wherein the diffusion member includes a first surface disposed to face the light source and a second surface that is a surface opposite to the first surface,
   a plurality of convex patterns are disposed on the first surface, and
   each of the plurality of convex patterns has a long axis in a direction parallel to the first direction.

2. The light output device of claim 1, wherein the diffusion member transforms the second emission pattern into a third emission pattern and outputs the third emission pattern.

3. The light output device of claim 2, wherein the second surface of the diffusion member is a flat surface.

4. The light output device of claim 3, wherein each of the plurality of convex patterns has a semi-cylindrical shape extending in the first direction.

5. The light output device of claim 4, wherein the plurality of convex patterns are disposed adjacent to each other in the first direction and a second direction perpendicular to a direction of an optical axis of the lens group.

6. The light output device of claim 2, wherein a plurality of convex patterns are further disposed on the second surface of the diffusion member, and
the plurality of convex patterns formed on the first surface and the plurality of convex patterns formed on the second surface are disposed symmetrically to each other.

7. The light output device of claim 6, wherein each of the plurality of convex patterns formed on the first surface and each of the plurality of convex patterns formed on the second surface has a semi-cylindrical shape extending in the first direction.

8. The light output device of claim 1, wherein the light source includes a plurality of emitters disposed in an m×n matrix, and
n that is the number of emitters disposed in the first direction is greater than m that is the number of emitters disposed in a second direction perpendicular to the first direction.

9. The light output device of claim 1, wherein the lens group includes a first lens and a second lens sequentially disposed from the diffusion member,

both surfaces of the first lens have a convex shape, and
both surfaces of the second lens have a concave shape.

10. The light output device of claim 2, wherein the third emission pattern includes first and second edges that are symmetrical to each other with respect to an axis in the first direction, and third and fourth edges that are symmetrical to each other with respect to an axis in a second direction that is perpendicular to the first direction, and
the first to fourth edges have a concave shape.

FIG. 1

DIFFUSION MEMBER — 130

LENS GROUP — 120

LIGHT SOURCE — 110

LIGHT-EMITTING UNIT — 100

LENS GROUP — 230

FILTER — 220

IMAGE SENSOR — 210

LIGHT-RECEIVING UNIT — 200

DEPTH INFORMATION GENERATING UNIT — 300

CONTROL UNIT — 400

1000

FIG. 2

FIG. 3

FIG. 4A

FIG. 4B

FIG. 5

112    111

●  ●  ●  ●  ●  ●  ●  ●  ●  ●  ●  ●  ●  ●  ●  ●  ●  ●  ●

SECOND DIRECTION

FIRST DIRECTION

FIG. 6

SECOND DIRECTION

FIRST DIRECTION

FIG. 7

FIG. 8

SECOND DIRECTION

FIRST DIRECTION

FIG. 9A

FIG. 9B

130A

131

130B

FIRST DIRECTION

SECOND DIRECTION

FIG. 9C

131

SECOND DIRECTION

FIRST DIRECTION

FIG. 10

SECOND DIRECTION

FIRST DIRECTION

FIG. 11A

FIG. 11B

FIG. 12

131

SECOND DIRECTION

FIRST DIRECTION

FIG. 13

231

232

233

210

FIG. 14A

SECOND DIRECTION

FIRST DIRECTION

FIG. 14B

FIG. 15A

110

112

SECOND DIRECTION

FIRST DIRECTION

FIG. 15B

SECOND DIRECTION

FIRST DIRECTION

FIG. 16A

FIG. 16B

SECOND DIRECTION

FIRST DIRECTION

FIG. 17

# INTERNATIONAL SEARCH REPORT

| | International application No. |
|---|---|
| | **PCT/KR2023/011833** |

## A. CLASSIFICATION OF SUBJECT MATTER

**G02B 27/09**(2006.01)i; **G02B 27/30**(2006.01)i; **G01B 11/22**(2006.01)i; **G01S 7/481**(2006.01)i

According to International Patent Classification (IPC) or to both national classification and IPC

## B. FIELDS SEARCHED

Minimum documentation searched (classification system followed by classification symbols)

G02B 27/09(2006.01); G01C 3/06(2006.01); G01S 17/93(2006.01); G01S 7/481(2006.01); G01S 7/484(2006.01); G02B 13/04(2006.01); G02B 13/18(2006.01); G02B 3/00(2006.01); H01S 5/042(2006.01); H04N 5/225(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 렌즈(lens), 발광 패턴(light pattern), 볼록 패턴(convex pattern), 라이다 (lidar), 확산부재(diffuser)

## C. DOCUMENTS CONSIDERED TO BE RELEVANT

| Category* | Citation of document, with indication, where appropriate, of the relevant passages | Relevant to claim No. |
|---|---|---|
| Y | WO 2022-102447 A1 (SONY SEMICONDUCTOR SOLUTIONS CORPORATION) 19 May 2022 (2022-05-19)<br>See paragraphs [0028]-[0057] and figure 3. | 1-10 |
| Y | KR 10-2021-0063674 A (LG INNOTEK CO., LTD.) 02 June 2021 (2021-06-02)<br>See paragraphs [0035]-[0066] and figure 2. | 1-10 |
| Y | KR 10-2020-0004873 A (ROBERT BOSCH GMBH) 14 January 2020 (2020-01-14)<br>See paragraph [0070]. | 6,7 |
| Y | WO 2021-193085 A1 (SONY GROUP CORPORATION et al.) 30 September 2021 (2021-09-30)<br>See paragraph [0011]. | 9 |
| A | JP 2021-099278 A (HITACHI-LG DATA STORAGE INC.) 01 July 2021 (2021-07-01)<br>See paragraphs [0012]-[0046]. | 1-10 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **14 November 2023** | **14 November 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/011833**

| Patent document cited in search report | | | Publication date (day/month/year) | Patent family member(s) | | | Publication date (day/month/year) |
|---|---|---|---|---|---|---|---|
| WO | 2022-102447 | A1 | 19 May 2022 | EP | 4246177 | A1 | 20 September 2023 |
| KR | 10-2021-0063674 | A | 02 June 2021 | CN | 114762308 | A | 15 July 2022 |
| | | | | EP | 4068746 | A1 | 05 October 2022 |
| | | | | JP | 2023-504023 | A | 01 February 2023 |
| | | | | US | 2023-0020189 | A1 | 19 January 2023 |
| | | | | WO | 2021-107465 | A1 | 03 June 2021 |
| KR | 10-2020-0004873 | A | 14 January 2020 | CN | 110622030 | A | 27 December 2019 |
| | | | | DE | 10-2017-208052 | A1 | 15 November 2018 |
| | | | | EP | 3622317 | A1 | 18 March 2020 |
| | | | | JP | 2020-519891 | A | 02 July 2020 |
| | | | | US | 11500105 | B2 | 15 November 2022 |
| | | | | US | 2021-0157008 | A1 | 27 May 2021 |
| | | | | WO | 2018-206517 | A1 | 15 November 2018 |
| WO | 2021-193085 | A1 | 30 September 2021 | CN | 115104056 | A | 23 September 2022 |
| | | | | US | 2023-0114890 | A1 | 13 April 2023 |
| JP | 2021-099278 | A | 01 July 2021 | CN | 113030994 | A | 25 June 2021 |
| | | | | JP | 7245767 | B2 | 24 March 2023 |
| | | | | US | 11789122 | B2 | 17 October 2023 |
| | | | | US | 2021-0190917 | A1 | 24 June 2021 |

Form PCT/ISA/210 (patent family annex) (July 2022)